(19) **Europäisches Patentamt**
**European Patent Office**
**Office européen des brevets**

(11) **EP 1 866 062 B1**

(12) **EUROPÄISCHE PATENTSCHRIFT**

(45) Veröffentlichungstag und Bekanntmachung des Hinweises auf die Patenterteilung:
**23.05.2012   Patentblatt 2012/21**

(51) Int Cl.:
*B01D 53/94* *(2006.01)*      *F01N 3/20* *(2006.01)*
*F01N 9/00* *(2006.01)*

(21) Anmeldenummer: 06723397.3

(22) Anmeldetag: **14.03.2006**

(86) Internationale Anmeldenummer:
**PCT/EP2006/002305**

(87) Internationale Veröffentlichungsnummer:
**WO 2006/097268 (21.09.2006 Gazette 2006/38)**

(54) **VORRICHTUNG ZUR ENTFERNUNG VON STICKOXIDEN AUS BRENNKRAFTMASCHINENABGAS UND VERFAHREN ZUR DOSIERUNG EINES ZUSCHLAGSTOFFS FÜR BRENNKRAFTMASCHINENABGAS**

DEVICE FOR REMOVING NITROGEN OXIDES FROM INTERNAL COMBUSTION ENGINE WASTE GAS AND METHOD FOR DOSING AN AGGREGATE OF INTERNAL COMBUSTION ENGINE WASTE GAS

DISPOSITIF PERMETTANT D'ELIMINER LES OXYDES AZOTIQUES DES GAZ D'ECHAPPEMENT DE MOTEURS A COMBUSTION INTERNE ET PROCEDE DE DOSAGE D'UN ADDITIF DES GAZ D'ECHAPPEMENT DES MOTEURS A COMBUSTION INTERNE

(84) Benannte Vertragsstaaten:
**DE FR GB IT**

(30) Priorität: **18.03.2005   DE 102005012568**

(43) Veröffentlichungstag der Anmeldung:
**19.12.2007   Patentblatt 2007/51**

(73) Patentinhaber: **Daimler AG**
**70327 Stuttgart (DE)**

(72) Erfinder:
 • **CHAINEUX, Marc**
  **70329 Stuttgart (DE)**
 • **CHRISTNER, Bernd**
  **72584 Huelben (DE)**

 • **FEKETE, Nicholas**
  **70597 Stuttgart (DE)**
 • **KEPPELER, Berthold**
  **73277 Owen (DE)**
 • **PAULE, Markus**
  **71404 Korb (DE)**

(74) Vertreter: **JENSEN & SON**
**366-368 Old Street**
**London**
**EC1V 9LT (GB)**

(56) Entgegenhaltungen:
**EP-A- 0 554 766      EP-A- 1 132 585**
**DE-A1- 10 022 981    DE-A1- 10 347 131**
**DE-C1- 4 217 552**

**Beschreibung**

Die Erfindung betrifft eine Vorrichtung zur Entfernung von Stickoxiden aus dem Abgas einer überwiegend mit Luftüberschuss betriebenen Brennkraftmaschine nach dem Oberbegriff des Anspruchs 1 sowie ein Verfahren zur Dosierung eines ein Reduktionsmittel enthaltenden Zuschlagstoffs in eine Abgasleitung einer überwiegend mit Luftüberschuss betriebenen Brennkraftmaschine nach dem Oberbegriff des Anspruchs 8.

Aus der DE 101 26 456 A1 ist eine Vorrichtung und ein Verfahren zur Entfernung von Stickoxiden aus dem Abgas mager betriebener Brennkraftmaschinen mittels eines Ammoniak enthaltenden Reduktionsmittels bekannt, bei welchem ein in wenigstens zwei voneinander getrennte Teile aufgeteilter Stickoxid-Reduktionskatalysator eingesetzt wird. Ausgangsseitig jeden Katalysatorteils ist ein Sensor vorgesehen, der den Ammoniakschlupf des jeweiligen Katalysatorteils erfasst. Eine Zugabe des Reduktionsmittels erfolgt geregelt auf der Basis des erfassten Ammoniakschlupfes. Auf diese Weise ist eine differenzierte Beurteilung des gesamten Katalysatorvolumens ermöglicht und der Stickoxidumsatz kann im Vergleich zu einer integralen Erfassung eines gleich großen Katalysatorvolumens verbessert werden. Nachteilig sind jedoch die Kosten für die Sensoren. Zudem stellt der Ammoniaksschlupf eine Größe dar, die den Katalysatorzustand lediglich indirekt charakterisiert. Weiterhin erweist sich eine schlupfgeregelte Reduktionsmittelzugabe als schwierig, wenn der Ammoniakschlupf vollständig vermieden werden soll.

EP 1 132 585 A2 offenbart eine Vorrichtung zur Entfernung von Stickoxiden aus Brennkraftmaschinenabgas mit einem zwei hintereinander und räumlich getrennt voneinander angeordneten Stickoxid-Reduktionskatalysatorteilen in der entsprechenden Abgasleitung. Für jedes der Katalysatorteile ist eingangsseitig eine separate Zugabestelle für ein Stickoxidreduktionsmittel vorgesehen. Die über die Zugabestellen abgegebenen Reduktionsmittelmengen sind an das Temperaturgefälle zwischen den Katalysatorteilen angepasst.

In der Patentschrift DE 42 17 552 C1 ist eine Vorrichtung mit einem einteiligen Stickoxid-Reduktionskatalysator zur Entfernung von Stickoxiden aus Brennkraftmaschinenabgas offenbart. Dabei erfolgt eine Reduktionsmittelzufuhr ins Abgas stromauf des Katalysators unter Berücksichtigung der Signale von zwei Ammoniak-Sensoren derart, dass ein Ammoniak-Füllstand des Katalysators für eine möglichst optimale Stickoxidreduktion eingestellt wird.

Aufgabe der Erfindung ist es, eine Vorrichtung und ein Verfahren anzugeben, welche auf einfache Weise eine weiter verbesserte Stickoxidverminderung für eine überwiegend mit Luftüberschuss betriebene Brennkraftmaschine ermöglichen.

Diese Aufgabe wird durch eine Vorrichtung mit den Merkmalen des Anspruchs 1 sowie durch ein Verfahren mit den Merkmalen des Anspruchs 8 gelöst.

Für die erfindungsgemäße Vorrichtung sind Füllstandsermittlungsmittel zur Ermittlung eines Reduktionsmittelfüllstands von im ersten Katalysatorteil und/oder im zweiten Katalysatorteil gespeicherten Reduktionsmittel vorgesehen, und die Zugabe des Zuschlagstoffs ist in Abhängigkeit vom von den Füllstandsermittlungsmitteln ermittelten Reduktionsmittelfüllstand des ersten Katalysatorteils und/oder des zweiten Katalysatorteils einstellbar. Vorzugsweise ist eine massen- oder volumenbezogene Dosierrate des Zuschlagstoffs einstellbar. Der Reduktionsmittelfüllstand stellt eine sehr aussagefähige Größe zur Beurteilung des Katalysatorzustands dar und bestimmt maßgeblich den Stickoxidumsatz und den Reduktionsmittelschlupf. Die Ermittlung des Reduktionsmittelfüllstands im ersten und/oder im zweiten Katalysatorteil erlaubt eine differenzierte Beurteilung des Katalysatorzustands, welche es ermöglicht, die Katalysatorteile einzeln hinsichtlich des Stickoxidumsatzes und des Reduktionsmittelschlupfs optimal einzustellen. Insgesamt ist folglich eine Optimierung von Stickoxidumsatz und Reduktionsmittelschlupf ermöglicht.

Als Zuschlagstoff für das Abgas kommt in erster Linie ein Ammoniak enthaltender oder zur Abspaltung von Ammoniak geeigneter Stoff wie Harnstoff, Ammoniumcarbamat oder ähnliches in Frage. Der Zuschlagstoff kann dem Abgas in Reinform oder als wässrige Lösung und/oder als aerosolartiger Nebel an einer insbesondere stromauf des ersten Katalysatorteils in der Abgasleitung angeordneten Zugabestelle zugegeben werden. Die Zugabestelle ist vorzugsweise in der Art eines Dosierventils mit ein oder mehreren Düsenöffnungen ausgebildet. Der Stickoxid-Reduktionskatalysator ist vorzugsweise als klassischer SCR-Katalysator, insbesondere auf der Basis von Wolframoxid bzw. Vanadiumpentoxid oder als zeolithischer Katalysator ausgebildet. Es ist bekannt, dass diese Katalysatortypen beträchtliche Mengen von Ammoniak speichern können, welcher als Reaktionspartner für eine Reduktion von mit dem Abgas zugeführten Stickoxiden wirkt. In diesem Sinne ist unter einem Reduktionsmittelfüllstand die Menge an im Katalysatorbett gespeichertem Reduktionsmittel zu verstehen. Vorzugsweise wird als Reduktionsmittelfüllstand eine relative Größe verwendet, welche die gespeicherte Reduktionsmittelmenge in Bezug auf die unter den aktuellen Bedingungen maximal speicherbare Reduktionsmittelmenge angibt.

Die Füllstandsermittlungsmittel können beispielsweise einen im Katalysatorbett angeordneten, gegenüber dem Reduktionsmittel empfindlichen Sensor umfassen, der in der Lage ist, die gespeicherte Reduktionsmittelmenge zu erfassen. Es ist jedoch vorliegend vorgesehen, den Reduktionsmittelfüllstand rechnerisch zu ermitteln, so dass auf einen solchen Füllstandssensor verzichtet werden kann. Die Füllstandsermittlungsmittel sind daher vorzugsweise als Elektronikeinheit ausgeführt, welche auf gespeicherte Daten, vorzugsweise in Form von Kennlinien, Kennfeldern und Programmen zugreifen kann. Anhand der Daten und zusätzlicher Eingangssignale betreffend maßgebliche Zustandsgrößen des Stickoxid-Reduktionskatalysators und des Abgases sowie Betriebsdaten der Brennkraftmaschine, wie beispielsweise Temperatur, Sauerstoffgehalt des Abgases, Abgasmassenstrom, Brennkraftmaschinenlast und -drehzahl, erfolgt eine modellbasierte rechnerische Ermittlung des Reduktionsmittelfüllstands im ersten und/ oder im zweiten Katalysatorteil. Dabei ist es vorteilhaft, wenn die Füllstandsermittlungsmittel mit einer üblicherweise ohnehin vorgesehenen elektronischen Brennkraftmaschinensteuerung kommunizieren können, so dass auf alle betriebsrelevanten Größen zugegriffen werden kann. Physikalisch können deshalb die Füllstandsermittlungsmittel auch integraler Bestandteil der elektronischen Brennkraftmaschinensteuerung sein. Sie können jedoch gleichermaßen als Bestandteil der Dosiereinheit ausgebildet sein.

Als Dosiereinheit ist im Sinne der Erfindung eine Steuereinheit zu verstehen, welche auf der Basis der vorliegenden Informationen betreffend den Reduktionsmittelfüllstand des ersten und/oder des zweiten Katalysatorteils die Einstellung der Zugabe bzw. eine Dosierung des Zuschlagstoffes vornimmt. Zur Einstellung der Zugabe steuert die Dosiereinheit dabei entsprechende Stellglieder wie Pumpen, Ventile und dergleichen an. Die Dosiereinheit ist vorzugsweise als Regler ausgebildet, welcher den Reduktionsmittelfüllstand des ersten und/ oder des zweiten Katalysatorteils einregeln kann. In diesem Sinne stellen die Reduktionsmittelfüllstände als Ausgangsgrößen, welche die Füllstandsermittlungsmittel generieren können, Regelgrößen dar, welche anhand der Zuschlagstoffzugabe als Stellgröße auf vorgebbare Werte eingeregelt werden. Unter Zugabe ist dabei vorzugsweise die je Zeiteinheit dem Abgas zugegebene Menge an Zuschlagstoff zu verstehen, wobei sich dabei eine Dosierrate durch Mittelung über ein mehr oder weniger ausgedehntes Zeitintervall ergibt, so dass ein und dieselbe Dosierrate sowohl durch eine gepulste Ein-Aus-Schattung als auch durch eine variable Einstellung innerhalb eines kontinuierlichen Wertebereichs oder durch Einstellung einer apparativ vorgegebenen Zugabemenge innerhalb eines bestimmten Zeitraums erhalten werden kann.

Bevorzugt ist es, für je einen Katalysatorteil einen separaten Regelkreis vorzusehen, so dass die Reduktionsmittelfüllstände des ersten und des zweiten Katalysatorteils getrennt eingeregelt werden können. Besonders bevorzugt ist es, für die Reduktionsmittelfüllstände wechselseitige Querbeziehungen vorzugeben, so dass bei der Einregelung des Reduktionsmittelfüllstands eines Katalysatorteils der des zweiten Katalysatorteils berücksichtigt wird. Besonders vorteilhaft ist in diesem Zusammenhang, dass lediglich eine einzige Zugabestelle stromauf des ersten Katalysatorteils benötigt wird, um die Erfindung zu verwirklichen.

Was die Katalysatorteile betrifft, so ist erfindungsgemäß vorgesehen, dass der erste und der zweite Katalysatorteil räumlich getrennt voneinander angeordnet sind. Dabei kann es vorteilhaft sein, die Katalysatorteile vergleichsweise weit auseinander in der Abgasleitung anzuordnen, so dass sich zwischen ihnen bei aufgeheiztem ersten Katalysatorteil ein vergleichsweise großes natürliches Temperaturgefälle von typischerweise 50 °C oder mehr einstellt. Auf diese Weise kann die starke Temperaturabhängigkeit der Reduktionsmittelspeicherfähigkeit ausgenutzt werden. Insbesondere kann durch unterschiedliche Katalysatormaterialien für den ersten und zweiten Katalysatorteil dieser Effekt besonders wirksam ausgenutzt werden. Erfindungsgemäß ist es weiter vorgesehen, dass der erste Katalysatorteil ein größeres Volumen aufweist als der zweite Katalysatorteil. Infolge des Temperaturgefälles längs des Abgasweges weist der zweite Katalysatorteil meist eine niedrigere Temperatur auf als der erste Katalysatorteil. Folglich kann für etwa gleich große Reduktionsmittelfüllstände der zweite Katalysatorteil kleiner ausgebildet sein, als der erste Katalysatorteil.

In Ausgestaltung der Erfindung ist der Reduktionsmittelfüllstand eines jeweiligen Katalysatorteils durch Summation und zeitliche Integration von wenigstens einer Umsatzrate von im jeweiligen Katalysatorteil umgesetzten Reduktionsmittel, einer Desorptionsrate von vom jeweiligen Katalysatorteil desorbierten Reduktionsmittel und einer Zufuhrrate von dem jeweiligen Katalysatorteil mit dem Abgas zugeführten Reduktionsmittel ermittelbar. Auf diese Weise ist eine laufende Ermittlung des aktuellen Reduktionsmittelfüllstands durch eine fortlaufend durchgeführte Bilanzierung der den Füllstand beeinflussenden Größen ermöglicht. Um die Genauigkeit der Füllstandsermittlung weiter zu verbessern, können bei der Bilanzierung zusätzlich weitere Faktoren berücksichtigt werden. Insbesondere kann zusätzlich eine Berücksichtigung von Reduktionsmittelverlusten durch Nebenreaktionen, wie beispielsweise einer Reduktionsmitteldirektoxidation vorgesehen sein. Der Einfluss von Nebenreaktionen kann auch in der Umsatzrate des Reduktionsmittels enthalten sein.

In weiterer Ausgestaltung der Erfindung sind ein Kennfeldsatz für die Umsatzrate und die Desorptionsrate vorgesehen, auf welche die Füllstandsermittlungsmittel bei der Ermittlung des

Reduktionsmittelfüllstands zugreifen können. Die Kennfelder oder auch Kennlinien enthalten dabei zweckmäßigerweise im Vorfeld ermittelte Daten für den jeweiligen Katalysator. Werden für die Ermittlung des Reduktionsmittelfüllstands neben der Umsatzrate und der Desorptionsrate weitere Einflussfaktoren, wie beispielsweise eine Verlustrate durch Direktoxidation berücksichtigt, so können auch für hierfür separate Kennfelder bereitgestellt sein, auf welche die Füllstandsermittlungsmittel zugreifen können. Verluste durch Nebenreaktionen können jedoch auch im Kennfeld für die Umsatzrate enthalten und berücksichtigt sein.

In weiterer Ausgestaltung der Erfindung sind für den Reduktionsmittelfüllstand des ersten Katalysatorteils ein erster Bereich mit einem ersten unteren Schwellenwert und einem ersten oberen Schwellenwert und für den Reduktionsmittelfüllstand des zweiten Katalysatorteils ein zweiter Bereich mit einem zweiten unteren Schwellenwert und einem zweiten oberen Schwellenwert vorgebbar und die Dosiereinheit wirkt derart mit den Füllstandsermittlungsmitteln zusammen, dass eine Einregelung des Reduktionsmittelfüllstands des ersten Katalysatorteils und/oder des zweiten Katalysatorteils in den jeweiligen Bereich ermöglicht ist. Die Bereiche für den Reduktionsmittelfüllstand werden zweckmäßigerweise vorab so vorgegeben, dass sich insgesamt ein optimaler Stickoxidumsatz bei gleichzeitig minimalem oder vernachlässigbarem Reduktionsmittelschlupf ergibt. Durch geeignete Vorversuche können die Bereiche ermittelt werden. Die Bereiche für den Reduktionsmittelfüllstand können für den ersten und den zweiten Katalysatorteil unterschiedlich oder identisch sein.

In weiterer Ausgestaltung der Erfindung ist für den Stickoxid-Reduktionskatalysator ein Alterungsfaktor ermittelbar und der erste und/oder der zweite Bereich für den Reduktionsmittelfüllstand ist in Abhängigkeit vom Alterungsfaktor vorgebbar. Auf diese Weise werden die Bereiche, in welche der Reduktionsmittelfüllstand eingeregelt wird, auf die sich im Laufe der Zeit verändernden Eigenschaften des Katalysators angepasst. Eine sich im Laufe der Zeit einstellende Katalysatoralterung kann daher ausgeglichen werden, so dass über lange Betriebszeiten eine große Effizienz der Abgasreinigung gewährleistet ist. Falls der erste Katalysatorteil einer höheren Temperaturbelastung ausgesetzt ist, kann durch Anpassung der Bereiche dessen schneller nachlassende Wirksamkeit in vorteilhafter Weise ausgeglichen werden. Auf diese Weise kommt die getrennte Betrachtung von unterscheidbaren Katalysatorteilen vorteilhaft zum Tragen. Es kann vorgesehen sein, ausschließlich eine durch Temperaturbelastung hervorgerufene Alterung zu berücksichtigen. In diesem Fall wird zweckmäßigerweise eine gewichtete Verweildauer bei der jeweiligen Temperatur zur Ermittlung des Alterungsfaktors herangezogen.

In weiterer Ausgestaltung der Erfindung sind ein für einen ungealterten Stickoxid-Reduktionskatalysator angepasster erster Kennfeldsatz und ein für einen definiert gealterten Stickoxid-Reduktionskatalysator angepasster zweiter Kennfeldsatz vorgesehen, wobei dem ersten Kennfeldsatz ein erster Alterungsfaktor und dem zweiten Kennfeldsatz ein zweiter Alterungsfaktor zugeordnet sind und die Füllstandsermittlungsmittel können bei der Ermittlung des Reduktionsmittelfüllstands in Abhängigkeit vom aktuellen Alterungsfaktor eine Interpolation zwischen den Daten des ersten Kennfeldsatzes und des zweiten Kennfeldsatzes vornehmen. Dies ermöglicht auf einfache Weise unter Vermeidung eines erhöhten Speicherplatzbedarfs bzw. Rechenaufwands eine angemessene Berücksichtigung des aktuellen Alterungszustands des ersten und/oder zweiten Katalysatorteils. Vorzugsweise wird der Alterungsfaktor zwischen Null und eins bzw. 100 % definiert, wobei eine 100 %-ige Alterung die maximal zulässige Alterung darstellt und die Kennfeldsätze diesen Alterungszuständen entsprechen.

In weiterer Ausgestaltung der Erfindung ist ein gegenüber Stickoxid und/oder dem Reduktionsmittel empfindlicher Abgassensor stromab des ersten Katalysatorteils und/oder des zweiten Katalysatorteils in der Abgasleitung angeordnet. Bevorzugt dient dieser zum Abgleich der von den Füllstandsermittlungsmitteln vorgenommenen Berechnungen bzw. zum Abgleich des Berechnungsmodells. Hierzu kann beispielsweise ein Vergleich zwischen einer errechneten und einer sensorisch erfassten Reduktionsmitteldesorption oder Stickoxid-Konzentration vorgenommen werden. Vorzugsweise geschieht dies an vorgebbaren oder vorgegebenen definierten Betriebspunkten der Brennkraftmaschine oder bei einem definierten Zustand des Katalysators, beispielsweise bei jedem Start der Brennkraftmaschine oder vor Beginn einer Dosierung.

In dem erfindungsgemäßen Verfahren wird ein Reduktionsmittelfüllstand des ersten Katalysatorteils und des zweiten Katalysatorteils ermittelt und in Abhängigkeit vom Reduktionsmittelfüllstand des ersten Katalysatorteils und/oder des zweiten Katalysatorteils wird der Reduktionsmittelfüllstand des ersten Katalysatorteils oder der Reduktionsmittelfüllstand des zweiten Katalysatorteils als Regelgröße für die Regelung der Zugabe des Zuschlagstoffs ausgewählt. Durch die vorzugsweise parallel erfolgende Ermittlung der Reduktionsmittelfüllstände sowohl des ersten als auch des zweiten Katalysatorteils kann die Regelung der Zugabe so erfolgen, dass beide Katalysatorteile jeweils überwiegend ihren optimalen Reduktionsmittelfüllstand aufweisen, der zweckmäßigerweise an die einströmenden Stickoxidmassenströme angepasst ist. Dies kann insbesondere dadurch erreicht werden, dass die Regelung der Zuschlagstoffzugabe sich alternativ am Reduktionsmittelfüllstand des ersten oder des zweiten Katalysatorteils orientiert. Je nach Bedarf wird zwischen dem Reduktionsmittelfüllstand des ersten oder des zweiten Katalysatorteils als aktuelle Regelgröße für die Zugabe umgeschaltet. Die Größen der Reduktionsmittelfüllstände sind dabei die maßgebenden Umschaltkriterien. Diese können flexibel vorgebbar oder fest vorgegeben sein. Auf diese Weise kann insgesamt ein optimaler Stickoxidumsatz bei gleichzeitig vernachlässigbarem Reduktionsmittelschlupf erreicht werden. Erfindungsgemäß wird der Reduktionsmittelfüllstand eines jeweiligen Katalysatorteils durch Summation und zeitliche Integration von wenigstens einer Umsatzrate von im jeweiligen Katalysatorteil umgesetzten Reduktionsmittel, einer Desorptionsrate von vom jeweiligen Katalysatorteil desorbierten Reduktionsmittel und einer Zufuhrrate von dem jeweiligen Katalysatorteil mit dem Abgas zugeführten Reduktionsmittel ermittelt. Umsatzrate und Desorptionsrate werden zweckmäßigerweise Kennfeldern entnommen, die für den jeweiligen Betriebszustand der Brennkraftmaschine bzw. eines Katalysatorteils verfügbar sind. Über die Summation und Integration dieser den jeweiligen Füllstand bestimmenden Größen kann letzterer laufend zuverlässig ermittelt werden.

Bei der Ermittlung der Umsatzrate wird die Umsetzung von im jeweiligen Katalysatorteil gespeicherten Reduktionsmittel mit im Abgas enthaltenem Stickoxid und Sauerstoff berücksichtigt und die Zugabe des Zuschlagstoffes erfolgt stets nur über die stromauf des ersten Katalysatorteils angeordnete Zugabestelle. Insbesondere infolge der zusätzlich berücksichtigten Direktoxidation des gespeicherten Reduktionsmittels mit dem im Abgas vorhandenen Sauerstoff ist eine besonders zuverlässige Ermittlung der aktuellen Reduktionsmittelumsatzrate ermöglicht.

In Ausgestaltung des Verfahrens wird bei der Ermittlung der Zufuhrrate für den zweiten Katalysatorteil die Desorptionsrate des ersten Katalysatorteils berücksichtigt. Dies ermöglicht eine besonders zuverlässige Ermittlung des Reduktionsmittelfüllstands des zweiten Katalysatorteils, so dass dessen Wirksamkeit bzw. Umsatzrate ebenfalls sehr zuverlässig ermittelt werden kann.

In weiterer Ausgestaltung des Verfahrens werden für den Reduktionsmittelfüllstand des ersten Katalysatorteils ein insbesondere erster Bereich mit einem ersten unteren Schwellenwert und einem ersten oberen Schwellenwert vorgegeben, und als Regelgröße für die Regelung der Zugabe des Zuschlagstoffs wird der Reduktionsmittelfüllstand des ersten Katalysatorteils ausgewählt, wenn der Reduktionsmittelfüllstand des ersten Katalysatorteils unter dem ersten oberen Schwellenwert liegt. Bei dieser Vorgehensweise wird ein Zielband für den Reduktionsmittelfüllstand des ersten Katalysatorteils vorgegeben. Solange dieses nicht überschritten wird, kann im ersten Katalysatorteil durch weitere Einspeicherung von Reduktionsmittel die Stckoxidumsatzrate noch gesteigert werden, ohne dass ein unzulässig hoher Reduktionsmittelschlupf auftritt. Wird daher in diesem Fall der Reduktionsmittelfüllstand des ersten Katalysatorteils als Regelgröße für die Zugabe ausgewählt, so kann der Reduktionsmittelfüllstand des ersten Katalysatorteils auf seinen bevorzugten Wert oder in seinen bevorzugten Wertebereich eingeregelt werden.

In weiterer Ausgestaltung des Verfahrens wird für den Reduktionsmittelfüllstand des ersten Katalysatorteils ein über dem ersten oberen Schwellenwert liegender oberer Grenzwert vorgegeben, und als Regelgröße für die Regelung der Zugabe des Zuschlagstoffs wird der Reduktionsmittelfüllstand des zweiten Katalysatorteils ausgewählt, wenn der Reduktionsmittelfüllstand des ersten Katalysatorteils zwischen dem ersten oberen Schwellenwert und dem oberen Grenzwert liegt. Bei dieser Vorgehensweise wird auf den Reduktionsmittelfüllstand des zweiten Katalysatorteils als Regelgröße umgeschaltet, wenn das bevorzugte Zielband für den Reduktionsmittelfüllstand des ersten Katalysatorteils überschritten ist. Unter diesen Bedingungen ist einerseits ein ausreichender Stickoxidumsatz im ersten Katalysatorteil ermöglicht, andererseits tritt ein angemessener Reduktionsmittelschlupf auf, der zur Auffüllung des Reduktionsmittelfüllstands des zweiten Katalysatorteils genutzt wird. Wird daher in diesem Fall der Reduktionsmittelfüllstand des zweiten Katalysatorteils als Regelgröße für die Zugabe ausgewählt, so kann auch der Reduktionsmittelfüllstand des zweiten Katalysatorteils auf seinen bevorzugten Wert oder in seinen bevorzugten Wertebereich eingeregelt werden. Gleichzeitig wird der Reduktionsmittelfüllstand des ersten Katalysatorteils weiter erfasst, um beispielsweise bei einem weiteren starken Ansteigen entsprechend reagieren zu können.

In weiterer Ausgestaltung des Verfahrens wird für den Stickoxid-Reduktionskatalysator ein eine Temperaturbelastung des Stickoxid-Reduktionskatalysators charakterisierender Alterungsfaktor ermittelt. Dies ermöglicht in vorteilhafter Weise eine Anpassung der bevorzugten Reduktionsmittelfüllstände des ersten und/oder des zweiten Katalysatorteils an ihren jeweiligen Alterungszustand. Die Temperaturbelastung und der entsprechende Alterungsfaktor werden dabei vorzugsweise für den ersten und den zweiten Katalysatorteil getrennt ermittelt.

In weiterer Ausgestaltung des Verfahrens werden daher der erste Bereich und/oder der obere Grenzwert für den Reduktionsmittelfüllstand des ersten Katalysatorteils und/oder der zweite Bereich für den Reduktionsmittelfüllstand des zweiten Katalysatorteils in Abhängigkeit vom Alterungsfaktor vorgegeben. Somit kann auf eine unterschiedlich starke Alterung der Katalysatorteile reagiert werden.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:

| Fig. 1 | eine schematisches Blockbild einer Brennkraftmaschine mit zugehöriger Abgasanlage, |
| Fig. 2 | ein Diagramm zur Verdeutlichung der Reduktionsmittelspeicherfähigkeit eines Stickoxid-Reduktionskatalysators, |
| Fig. 3 | ein Diagramm zur Verdeutlichung der Temperaturabhängigkeit der Reduktionsmittelspeicherfähigkeit, |
| Fig. 4 | ein Diagramm zur Verdeutlichung der Abhängigkeit von Stickoxidumsatz und Reduktionsmittelschlupf vom Reduktionsmittelfüllstand eines Stickoxid-Reduktionskatalysators, |
| Fig. 5 | ein Diagramm zur Verdeutlichung einer Katalysatoralterung infolge einer Einwirkung erhöhter Temperaturen, |
| Fig. 6 | eine schematische Blockbilddarstellung einer vorteilhaften Ausführungs- |

form einer Füllstandsermittlungseinheit,

Fig. 7a und 7b    Diagramme zur Verdeutlichung von vorgebbaren Werten für Reduktionsmittelfüllstände,

Fig. 8a bis 8c    Ablaufdiagramme zur Erläuterung der Vorgehensweise bei der Weitererarbeitung der erfassten Reduktionsmittelfüllstände und

Fig. 9    eine schematische Übersicht einer bevorzugten Ausführungsform der erfindungsgemäßen Vorrichtung in Blockbilddarstellung.

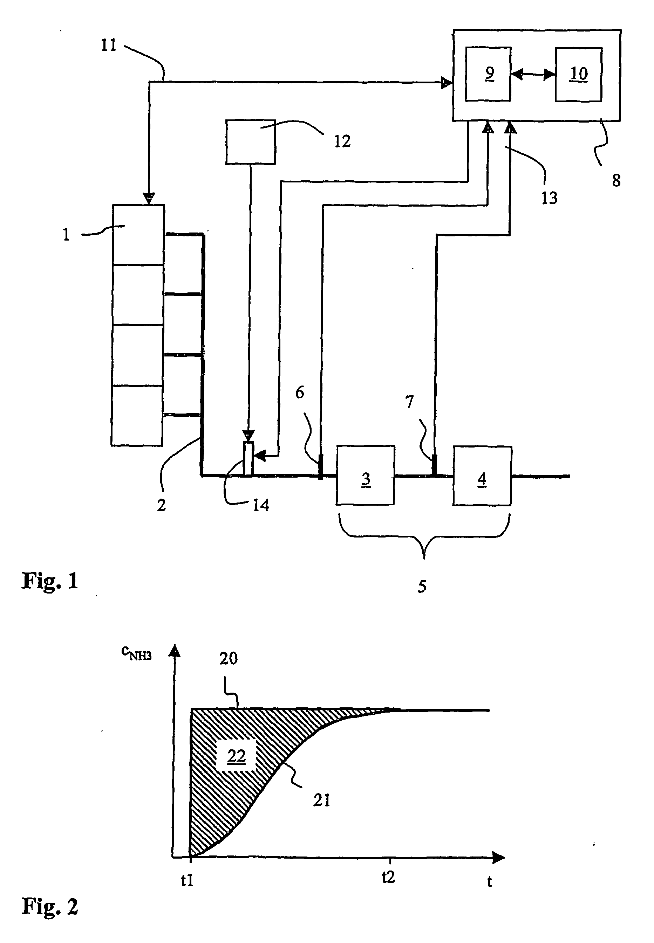

Fig. 1 zeigt beispielhaft ein schematisches Blockbild einer Brennkraftmaschine 1 mit zugehöriger Abgasreinigungsanlage. Die Brennkraftmaschine 1 ist vorzugsweise als luftverdichtende Brennkraftmaschine, nachfolgend vereinfacht als Dieselmotor bezeichnet, ausgebildet. Das vom Dieselmotor 1 ausgestoßene Abgas wird von einer Abgasleitung 2 aufgenommen und durchströmt den Abgaskatalysator 5, welcher die hier mit Abstand voneinander angeordneten Katalysatorteile 3 und 4 umfasst. Eingangsseitig der Katalysatorteile 3, 4 sind Temperatursensoren 6, 7 zur Messung der Abgaseintrittstemperaturen des in den jeweiligen Katalysatorteil 3, 4 einströmenden Abgases angeordnet. In der Abgasleitung 2 stromauf des ersten Temperatursensors 6 ist ein Dosierventil 14 zur Abgabe eines Zuschlagstoffes in das Abgas angeordnet. Die Versorgung des Dosierventils 14 mit Zuschlagstoff erfolgt aus einem Behälter 12. Ohne Einschränkung der Allgemeinheit wird nachfolgend davon ausgegangen, dass es sich bei dem Zuschlagstoff um eine wässrige Harnstofflösung handelt. Im heißen Abgas wird durch Thermolyse und/oder Hydrolyse das Reduktionsmittel Ammoniak ($NH_3$) freigesetzt, welches selektiv bezüglich der Reduktion der im Abgas enthaltenen Stickoxide wirkt. Dementsprechend ist der Katalysator 5 als klassischer SCR-Katalysator auf $V_2O_5/WO_3$-Basis oder zeolithisch ausgebildet. Die Temperatursensoren 6, 7 sowie das Dosierventil 14 sind über Steuer- bzw. Signalleitungen 13 mit einer zentralen Steuereinheit 8 verbunden. Die Steuereinheit 8 ist ferner über eine weitere Leitung 11 mit dem Dieselmotor 1 verbunden. Über diese Leitung 11 erhält die Steuereinheit 8 Informationen über Betriebszustandsgrößen des Dieselmotors 1. Dies können z.B. Informationen über das abgegebene Drehmoment oder die Drehzahl sein. Die Steuereinheit 8 umfasst vorzugsweise eine Recheneinheit und eine Speichereinheit sowie eine Ein-Ausgabeeinheit, was im Einzelnen nicht dargestellt ist. Dadurch ist die Steuereinheit 8 in der Lage, komplexe Signalverarbeitungsvorgänge vorzunehmen und den Betrieb des Dieselmotors 1 sowie der Abgasanlage zu erfassen und zu steuern bzw. zu regeln. Hierfür notwendige Kennfelder sind vorzugsweise in der Speichereinheit abgelegt, wobei auch eine adaptive Anpassung der Kennfelder vorgesehen sein kann. Die Kennfelder betreffen hauptsächlich die maßgeblichen Zustandsgrößen des Abgases, wie Massenstrom, Rohemission, Temperatur in Abhängigkeit der Betriebszustandsgrößen des Dieselmotors 1 wie Last, Drehzahl, Luftverhältniszahl etc. Ferner sind Kennfelder für die maßgeblichen Zustandsgrößen des Katalysators 5, wie Stickoxidumsatz, Ammoniakspeicherfähigkeit und dergleichen vorgesehen.

Zur insbesondere geregelten Ansteuerung des Dosierventils 14 und zur Einstellung einer Zugabe der Harnstofflösung ist eine Dosiereinheit 9 vorgesehen, welche hier beispielhaft Bestandteil der Steuereinheit 8 ist, jedoch ebenso als eigenständige Einheit ausgebildet sein kann. Gleiches gilt für eine Füllstandsermittlungseinheit 10, welche hauptsächlich der Ermittlung der in den Katalysatorteilen 3, 4 gespeicherten Ammoniakmengen dient, worauf weiter unten genauer eingegangen wird.

Es ist vorgesehen, dass die in Fig. 1 skizzierte Anlage weitere hier der Übersicht halber nicht eingezeichnete Komponenten aufweist oder aufweisen kann. Für den Dieselmotor 1 sind hier beispielhaft Aufladeeinheiten, Abgasrückführungseinheiten oder Kraftstoffeinspritzeinrichtungen etc. zu nennen. In der Abgasleitung 2 können weitere Komponenten wie beispielsweise ein zusätzlicher Oxidationskatalysator, ein Partikelfilter, Abgassensoren usw. enthalten sein.

Nachfolgend werden mit Bezug auf die Fig. 2 bis Fig. 4 verschiedene Kenngrößen eines typischen SCR-Katalysators erläutert. Dabei ist in Fig. 2 ein Diagramm zur Erläuterung der Ammoniakspeicherfähigkeit dargestellt.

Das Diagramm der Fig. 2 stellt einen typischen zeitlichen Verlauf $C_{NH3}(t)$ von Ammoniakkonzentrationen $C_{NH3}$ bei einer Beaufschlagung des SCR-Katalysators mit Ammoniak dar. Dabei wird davon ausgegangen, dass ein von eingespeichertem Ammoniak freier SCR-Katalysator unter isothermen Bedingungen zum Zeitpunkt t1 mit einem Abgaseingangsstrom vorgegebener und zeitlich konstanter Größe und Ammoniakeingangskonzentration beaufschlagt wird, was durch die Spur 20 wiedergegeben ist. Entsprechend seiner Ammoniak-Speicherfähigkeit nimmt im Zeitbereich zwischen t1 und t2 der SCR-Katalysator in zeitlich abnehmendem Maße Ammoniak auf. Dementsprechend bleibt die $NH_3$-Konzentration in dem den SCR-Katalysator verlassenden Abgasstrom hinter der Eingangskonzentration zurück, was durch die Spur 21 wiedergegeben ist. Zum Zeitpunkt t2 ist der SCR-Katalysator gesättigt, weshalb er keinen weiteren Ammoniak mehr speichern kann und die Spur 21 in die Spur 20 einmündet. Der Ammoniakfüllstand hat dann den Maximalwert von 100 % erreicht. Die dabei vom SCR-Katalysator gespeicherte Ammoniakmenge, welche die Ammoniakspeicherfähigkeit unter den entsprechenden Bedingungen darstellt, wird durch die Größe der Fläche 22 zwischen den beiden Spuren 20, 21 repräsentiert.

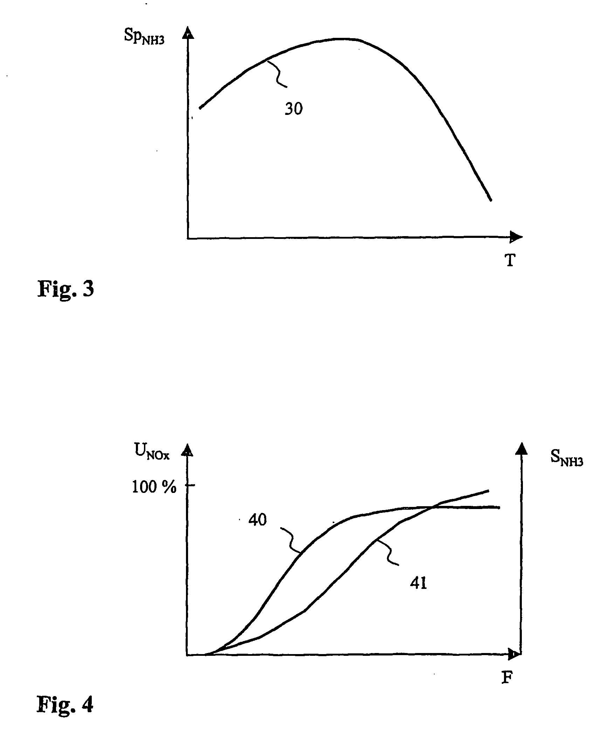

Die Ammoniakspeicherfähigkeit ist in erster Linie temperaturabhängig, was durch das in Fig. 3 dargestellte Diagramm wiedergegeben ist. Dabei stellt die Spur 30 einen typischen Verlauf der temperaturabhängigen Ammoniakspeicherfähigkeit $Sp_{NH3}$ (T) dar. Die Ammoniakspeicherfähigkeit $Sp_{NH3}$ (T) ist, wie dem Diagramm der Fig. 3 zu entnehmen ist, bei niedrigen Temperaturen T vergleichsweise groß und nimmt bei hohen Temperaturen T, etwa oberhalb 300 °C ab. Außerdem besteht eine Abhängigkeit vom Gasdurchsatz, was nicht näher dargestellt ist.

In diesem Zusammenhang wird nachfolgend davon ausgegangen, dass der Ammoniakfüllstand des SCR-Katalysators die gespeicherte Ammoniakmenge bezogen auf die unter den jeweiligen Bedingungen maximal speicherbare Ammoniakmenge gemäß den dargestellten Verhältnissen angibt.

Ein wichtiger Aspekt im Zusammenhang mit den Eigenschaften eines typischen SCR_Katalysators betrifft die Abhängigkeit des Stickoxidumsatzes vom Ammoniakfüllstand. In Fig. 4. ist durch die Spur 40 diese Abhängigkeit schematisch dargestellt. Im Vergleich hierzu ist durch die Spur 41 die Abhängigkeit des Ammoniakschlupfes $S_{NH3}$ vom Ammoniakfüllstand wiedergegeben. Wie ersichtlich, steigt mit zunehmendem Füllstand F der Stickoxidumsatz $U_{NOx}$ (F) mit flacher werdender Steigung kontinuierlich bis zu einen Maximalwert an, der im wesentlichen vom Gasdurchsatz und von der Temperatur bestimmt ist. Dies bedeutet, dass ab einem bestimmten Wert für den Ammoniakfüllstand F der Stickoxidumsatzes $U_{NOx}$ durch eine weitere Einspeicherung von Ammoniak im Katalysator nicht mehr gesteigert werden kann. Vielmehr erhöht sich, wie durch die Spur 41 dargestellt, der Ammoniakschlupf $S_{NH3}$. Bei der Einstellung eines für die jeweiligen Bedingungen optimalen Werts für den Ammoniakfüllstand F ist die Berücksichtigung dieser Tatbestände von besonderer Bedeutung. In diesem Zusammenhang bedeutet die erfindungsgemäß vorgesehene Möglichkeit, den Ammoiakfüllstand von zwei hintereinander angeordneten SCR-Katalysatorteilen getrennt einstellen zu können, einen wesentlichen Vorteil. Beispielsweise kann für den ersten Katalysatorteil ein vergleichsweise hoher Ammoniakfüllstand eingestellt werden, wobei der dabei auftretende Ammoniakschlupf vom nachgeordneten zweiten Katalysatorteil abgefangen werden kann.

Die in den Figuren 2 bis 4 schematisch dargestellten Abhängigkeiten werden zweckmäßigerweise für den einzusetzenden SCR-Katalysator vorab ermittelt und als Kennlinien bzw. Kennfelder abgelegt. Auf diese kann die Steuereinheit 8 zugreifen, so dass der Zustand der Katalysatorteile 3, 4 für jeden Betriebszustand umfassend ermittelt werden kann. Dabei ist erfindungsgemäß vorgesehen, einen Kennfeldsatz für einen ungealterten Neuzustand und einen weiteren Kennfeldsatz für einen definierten Alterungszustand, vorzugsweise entsprechend einer vorgegebenen Grenzalterung, vorzusehen. Besonders vorteilhaft ist es, dabei dem ungealterten Zustand einen ersten Alterungsfaktor von beispielsweise Null und dem Grenzalterungszustand einen zweiten Alterungsfaktor von beispielsweise Eins zuzuordnen. Während des Betriebs des Dieselmotors 1 wird der aktuelle Alterungszustand der Katalysatorteile 3, 4 laufend ermittelt und dem aktuellen Alterungszustand ein aktueller Alterungsfaktor AF zugeordnet, der zwischen Null und Eins liegt. Beim Zugriff auf Kennfelddaten wird dann entsprechend dem aktuellen Alterungsfaktor AF vorzugsweise linear zwischen den Daten der Kennfeldsätze für den Neuzustand und dem Grenzalterungszustand interpoliert.

Bei der Ermittlung des aktuellen Alterungsfaktors AF wird dabei vorzugsweise wie folgt vorgegangen. Für den einzusetzenden SCR-Katalysator wird vorab eine Temperaturschädigungskennlinie ermittelt, welche den für die Alterung überwiegend maßgebenden Temperatureinfluss berücksichtigt.

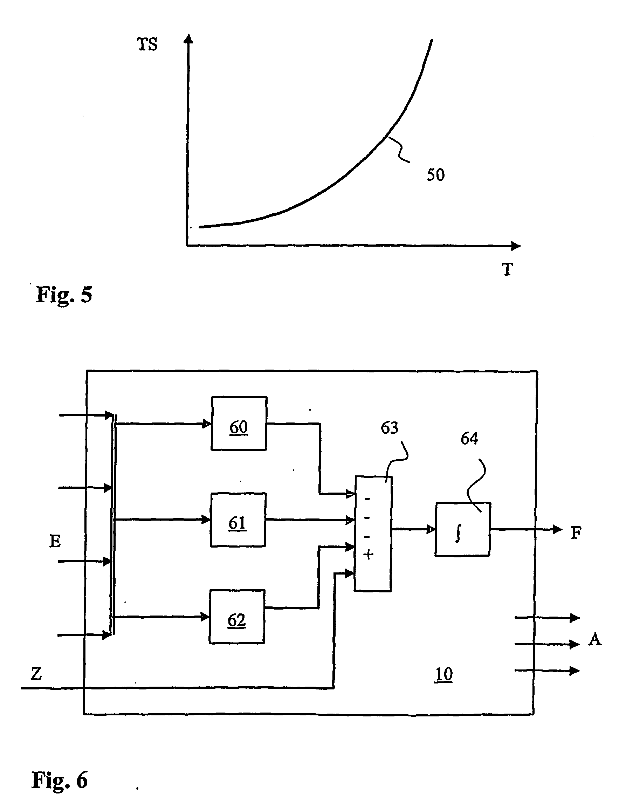

In Fig. 5 ist eine solche Temperaturschädigungskennlinie dargestellt. Die Temperaturschädigung TS weist typischerweise eine annähernd exponentielle Abhängigkeit von der Temperatur T auf. Beim Betrieb des Dieselmotors 1 erfolgt eine laufende zeitliche Integration des Temperaturschädigungswertes TS (T) entsprechend der ermittelten Katalysatortemperatur T und der in Fig. 5 dargestellten und gespeicherten Kennlinie gemäß der Formel

$$AF = \int TS(T) * dt.$$

Die Temperaturschädigung TS (T) ist dabei derart skaliert, dass sich für die Grenzschädigung ein Alterungsfaktor AF von Eins ergibt. Auf diese Weise kann die Temperaturbelastung der Katalysatorteile 3, 4 quantifiziert werden und eine an den Alterungszustand des jeweiligen Katalysatorteils 3, 4 angepasste Einstellung des Ammoniakfüllstands bzw. der Harnstoffdosierung vorgenommen werden. Außerdem ist eine laufende Diagnose der Katalysatorteile 3, 4 ermöglicht, so dass beispielsweise bei Erreichen der Grenzalterung eine entsprechende Warnmeldung ausgegeben werden kann.

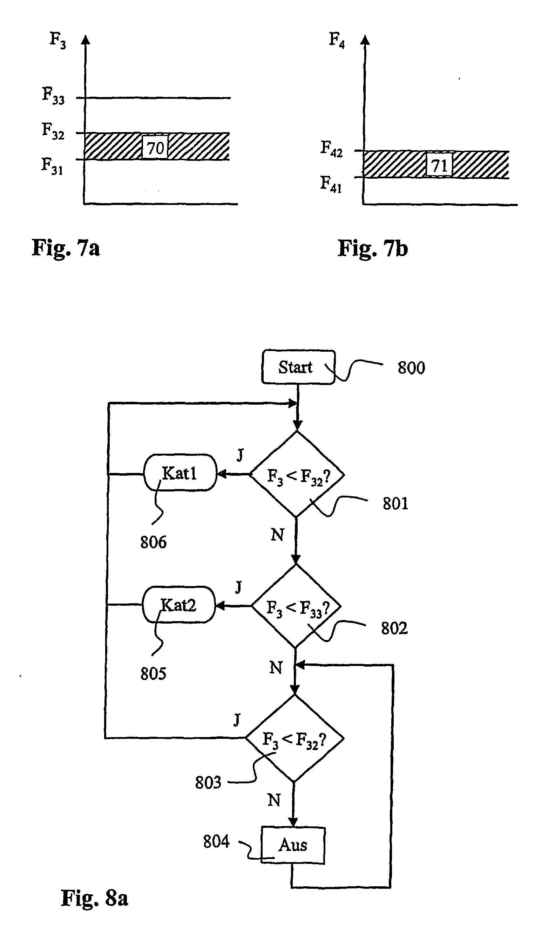

Nachfolgend wird unter Bezug auf die Figuren 6 und 7 eine bevorzugte Vorgehensweise für die Ermittlung und Einstellung des Ammoniakfüllstands näher erläutert.

In Fig. 6 ist eine vorteilhafte Ausgestaltung der Füllstandsermittlungseinheit 10 schematisch in Blockbildform dargestellt. Dabei sind lediglich die Teile dargestellt, welche zur Ermittlung des Ammoniakfüllstands eines der Katalysatorteile 3, 4 verwendet werden. Nachfolgend wird vereinfachend von Katalysator gesprochen. Die Füllstandsermittlungseinheit 10 erhält Eingabegrößen E, welche neben dem aktuellen Alterungsfaktor AF Abgaszustandsgrößen wie die Abgastemperatur, den Stickoxidgehalt und den Abgasmassenstrom betreffen. Die Füllstandsermittlungseinheit 10 verfügt über Kennfeldsätze 60, 61, 62 für die Umsetzung mit Stickoxiden, die Direktumsetzung mit Sauerstoff und die Desorptionsrate von im Katalysator gespeichertem Ammoniak. Dabei werden die maßgeblichen Daten entsprechend den vorliegenden Eingabegrößen bestimmt. Die Werte für die Umsetzung mit Stickoxiden, die Direktumsetzung mit Sauerstoff und die durch den Ammoniakschlupf $S_{NH3}$ gegebene Desorptionsrate werden zusammen mit der Ammoniakzufuhrrate Z einem Summationsglied 63 zugeführt, welches die betreffenden Größen vorzeichenrichtig summiert. Auf diese Weise ist eine Bilanzierung für die Größen ermöglicht, welche die im Katalysator gespeicherte Ammoniakmenge im wesentliche bestimmen. Der Summenwert wird einem Integrationsglied 64 zugeführt, dessen Ausgangsgröße den aktuellen Ammoniakfüllstand F des Katalysators darstellt. Daneben werden aus den vorliegenden Daten weitere Ausgangsgrößen A ermittelt. Dies sind vor allem Größen betreffend den Stickoxidgehalt des aus dem Katalysator ausströmenden Abgases, den Ammoniakschlupf $S_{NH3}$ sowie die infolge der Reaktionswärme oder durch Wärmeverluste gegebenenfalls veränderte Abgastemperatur. Es ist vorgesehen, dass für die Katalysatorteile 3, 4 die Berechnungen getrennt vorgenommen werden, wobei die Desorptionsrate bzw. der Ammoniakschlupf $S_{NH3}$ des ersten Katalysatorteils die Ammoniakzufuhrrate Z des zweiten Katalysatorteils 4 darstellt. Die Ammoniakzufuhrrate Z des ersten Katalysatorteils 3 bestimmt sich aus der über das Dosierventil 14 abgegebenen Harnstoff-Dosierrate, wobei es vorgesehen ist, Verluste infolge Wandabsorption oder Wandablagerung in der Abgasleitung 2, unvollständiger Aufbereitung und dergleichen zu berücksichtigen.

Aus dem ermittelten Ammoniakfüllstand F für den ersten Katalysatorteil 3 und/oder den zweiten Katalysatorteil 4 wird ermittelt, ob eine Zugabe von Harnstofflösung erfolgen soll bzw. die Dosierrate errechnet. Vorzugsweise erfolgt dies durch den Regler der Dosiereinheit 9, dem die Ammoniakfüllstände F als Regelgrößen zuführbar sind. Je nach Größe der Ammoniakfüllstande F dient dabei der Ammoniakfüllstand F des ersten Katalysatorteils 3 oder der des zweiten Katalysatorteils 4 als Regelgröße.

Zur Auswahl werden spezifische Werte für Ammoniakfüllstände vorgegeben, was durch die Diagramme der Figuren 7a und 7b dargestellt ist.

In den Diagrammen der Figuren 7a bzw. 7b sind Füllstände $F_3$ bzw. $F_4$ für den ersten Katalysatorteil 3 bzw. den zweiten Katalysatorteil 4 jeweils auf der Ordinate abgetragen. Erfindungsgemäß werden Füllstandsbereiche vorgegeben, in welche die Füllstände der Katalysatorteile 3, 4 eingeregelt werden. Dabei ist für den ersten Katalysatorteil 3 ein erster Füllstandsbereich 70 mit einem ersten unteren Schwellenwert $F_{31}$ und einem ersten oberen Schwellenwert $F_{32}$ vorgegeben. Analog ist für den zweiten Katalysatorteil 4 ein zweiter Füllstandsbereich 71 mit einem zweiten unteren Schwellenwert $F_{41}$ und einem zweiten oberen Schwellenwert $F_{42}$ vorgegeben. Zusätzlich ist für den ersten Katalysatorteil 3 ein über dem ersten oberen Schwellenwert $F_{32}$ liegender oberer Grenzwert $F_{33}$ vorgegeben. Die Füllstandsbereiche 70, 71 für die Katalysatorteile 3, 4 können durch identische Schwellenwerte vorgegeben sein, vorzugsweise sind sie jedoch verschieden und für den zweiten Katalysatorteil 4 ist ein zweiter Füllstandsbereich 71 vorgegeben, dessen zweite Schwellenwerte $F_{41}$, $F_{42}$, niedriger liegen als die ersten Schwellenwerte $F_{31}$, $F_{32}$ für den Füllstandsbereich 70 des ersten Katalysatorteils 3. Es ist vorgesehen, die Schwellenwerte $F_{31}$, $F_{32}$, $F_{41}$, $F_{42}$ in Abhängigkeit von der Temperatur des jeweiligen Katalysatorteils 3, 4 vorzugeben, wobei für den Fall, dass die Temperatur des ersten Katalysatorteils 3 viel höher als die Temperatur des zweiten Katalysatorteils ist, die Schwellenwerte $F_{41}$, $F_{42}$ vorzugsweise höher vorgegeben werden als die Schwellenwerte $F_{31}$, $F_{32}$. Es ist außerdem vorgesehen, die Bereiche 70, 71 hinsichtlich ihrer Schwellenwerte in Abhängigkeit vom Alterungsfaktor AF eines jeweiligen Katalysatorteils 3, 4 an den Alterungszustand anzupassen.

Eine Einstellung bzw. Einregelung der Füllstände der Katalysatorteile 3, 4 erfolgt nun vorzugsweise in Abhängigkeit der jeweils vorliegenden aktuellen Werte für den Reduktionsmittelfüllstand eines jeweiligen Katalysatorteils 3, 4 gemäß den in Figuren 8a bis 8c dargestellten Ablaufdiagrammen. Dabei wird nachfolgend davon ausgegangen, dass eine einfache Ein-Aus-Regelung der Harnstoffzugabe erfolgt. Eine andere Art der Regelung, beispielsweise in Form einer PID-Regelung kann natürlich ebenfalls vorgesehen sein. Vorzugsweise erfolgt die Ausführung der in den Ablaufdiagrammen wiedergegebenen Routinen in der Dosiereinheit 9.

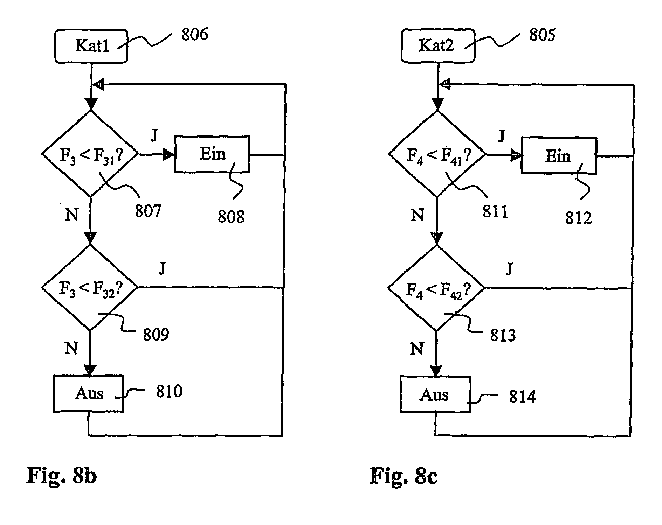

Im Ablaufdiagramm der Fig. 8a ist der Ablauf einer im Normalzustand ständig durchlaufenen ersten Abfrageschleife dargestellt. Die Abfrageschleife startet nach Feststellung einer Betriebsbereitschaft wenigstens des ersten Katalysatorteils 3 im Block 800. Im Abfrageblock 801 wird der von der Füllstandsermittlungseinheit 10 ermittelte Ammoniakfüllstand $F_3$ des ersten Katalysatorteils 3 abgefragt. Liegt dieser unterhalb des ersten oberen Schwellenwertes $F_{32}$, so wird in den Block 806 (Kat1) gesprungen und es wird der Füllstand des ersten Katalysatorteils 3 maßgebend für die Dosierung der Harnstofflösung. Auf die dann erfolgende weitere Vorgehensweise wird weiter unten mit Erläuterung des in Fig. 8b dargestellten zweiten Ablaufdiagramms eingegangen.

Wird im Abfrageblock 801 festgestellt, dass der Ammoniakfüllstand $F_3$ des ersten Katalysatorteils 3 oberhalb des ersten oberen Schwellenwertes $F_{32}$ liegt (N), so wird im nächsten Abfrageblock 802 abgefragt, ob der obere Grenzwert $F_{33}$ unterschritten ist. Ist dies der Fall, so wird in den Block 805 (Kat2) gesprungen und es wird der Füllstand des zweiten Katalysatorteils 4 maßgebend für die Dosierung der Harnstofflösung. Auf die dann erfolgende weitere Vorgehensweise wird weiter unten mit Erläuterung des in Fig. 8c dargestellten dritten Ablaufdiagramms eingegangen.

Falls die Abfrage des Blocks 802 mit "Nein" beantwortet wird, so wird im Block 803 nochmals abgefragt, ob der Füllstand unterhalb des ersten oberen Schwellenwertes $F_{32}$ liegt. Dies wird zunächst nicht der Fall sein, so dass der Block 804 erreicht wird und die Dosierung der Harnstofflösung abgestellt wird (Dosierung "Aus"). Der erste Katalysatorteil 3 hat somit ausreichend Ammoniak gespeichert, wobei sich der Füllstand durch Verluste infolge der Umsetzung mit Stickoxiden und/oder Sauerstoff sowie durch Desorption mit der Zeit verringert. Sinkt der Füllstand dabei unter den ersten oberen Schwellenwert $F_{32}$ ab, so wird dies infolge des wiederkehrenden Rücksprungs in den Abfrageblock 803 erkannt und es erfolgt ein Rücksprung zum Anfang der Abfrageschleife.

Aus dem in Fig. 8b dargestellten zweiten Ablaufdiagramm ergibt sich die Vorgehensweise, wenn für die Harnstoffdosierung der Füllstand $F_3$ des ersten Katalysatorteils 3 maßgebend ist. Dabei wird zunächst im Block 807 abgefragt, ob der Füllstand $F_3$ unterhalb des ersten unteren Schwellenwerts $F_{31}$ liegt. Ist dies der Fall, so wird die Dosierung der Harnstofflösung eingeschaltet (Block 808) und zurück zum Anfang der Abfrageschleife gesprungen. Im anderen Fall wird im Block 809 abgefragt, ob der Füllstand $F_3$ unterhalb des ersten oberen Schwellenwerts $F_{32}$ liegt. Ist dies der Fall, so wird ohne Änderung des Dosierzustands zurück zum Anfang der Abfrageschleife gesprungen. Ist dagegen der erste obere Schwellenwert $F_{32}$ überschritten (N), so wird die Dosierung der Harnstofflösung abgeschaltet (Block 810) und zurück zum Anfang der Abfrageschleife gesprungen.

Aus dem in Fig. 8c dargestellten dritten Ablaufdiagramm ergibt sich die Vorgehensweise, wenn für die Harnstoffdosierung der Füllstand $F_4$ des zweiten Katalysatorteils 4 maßgebend ist. Die Vorgehensweise ist dabei völlig analog zu der im Zusammenhang mit dem zweiten Ablaufdiagramm der Fig. 8b erläuterten Vorgehensweise, weshalb hier nicht näher darauf eingegangen wird. Insgesamt wird erreicht, dass für beide Katalysatorteile 3, 4 auf diese Weise der jeweils bevorzugte Füllstandsbereich eingestellt werden kann. Es wird betont, dass beim Durchlaufen der Abfrageschleifen der Figuren 8b und 8c die Abfrageschleife der Fig. 8a ständig aktiv ist, so dass flexibel auf eine Änderung der Füllstände reagiert werden kann.

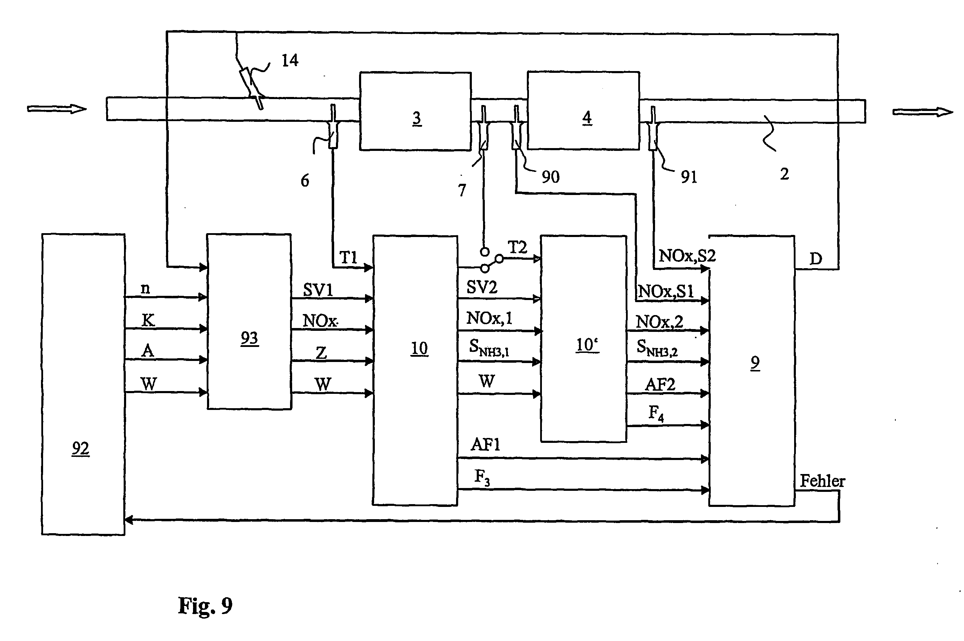

In Fig. 9 ist eine Blockbild einer bevorzugten Ausführungsform der erfindungsgemäßen Vorrichtung dargestellt, wobei Bauteile und Größen, soweit sie denen der Figuren 1 bis 8c entsprechen, mit den gleichen Bezugszeichen versehen sind.

Zur Einstellung einer Dosierrate D der Harnstoffzugabe ins Abgas über das Dosierventil 14 sind eine erste Füllstandsermittlungseinheit 10 zur Ermittlung des Ammoniakfüllstands $F_3$ des ersten Katalysatorteils 3, eine zweite Füllstandsermittlungseinheit 10' zur Ermittlung des Ammoniakfüllstands $F_4$ des zweiten Katalysatorteils 4 und eine Dosiereinheit 9 vorgesehen. Deren Funktionen sind weiter oben im wesentlichen erläutert, so dass nachfolgend lediglich auf Besonderheiten eingegangen wird.

Im Unterschied zu der in Fig. 1 dargestellten Vorrichtung weist die Vorrichtung gemäß Fig. 9 zwei zusätzlich in der Abgasleitung 2 angeordnete Abgassensoren 90 und 91 auf. Die Abgassensoren 90, 91 sind hier als Stickoxidsensoren ausgeführt, welche die Signale für die Stickoxidkonzentration NOx, S1 und NOx, S2 an der jeweiligen Stelle liefern. Es kann jedoch zumindest einer der Sensoren 90, 91 auch als Ammoniaksensor ausgeführt sein. Deren Daten dienen insbesondere dem Abgleich der Berechnungsroutinen bzw. der Adaption der hinterlegten Kennfelder und Kennlinien, so dass gegebenenfalls zumindest einer der Sensoren 90, 91 auch entfallen kann.

Ein Motorsteuergerät 92 übermittelt Daten betreffend die aktuelle Motordrehzahl n, die aktuelle Kraftstoffeinspritzmenge K und den aktuellen Abgasmassenstrom A neben weiteren Daten W als Eingangsdaten einer Signalaufbereitungs- und Recheneinheit 93. Diese errechnet aus den genannten Eingangsdaten und der aktuellen Harnstoffdosierrate D für den ersten Katalysatorteil 3 die aktuelle Raumgeschwindigkeit SV1, die aktuelle Stickoxidkonzentration NOx die Ammoniakzufuhrrate Z sowie weitere Daten W, welche der ersten Füllstandsermittlungseinheit 10 als Eingangsdaten zugeführt werden.

Die erste Füllstandsermittlungseinheit 10 errechnet aus den genannten Daten sowie aus der Abgaseintrittstemperatur T1 für den ersten Katalysatorteil 3 wie oben beschrieben den Füllstand $F_3$, den Alterungsfaktor AF1, den Ammoniakschlupf $S_{NH3,1}$ die Stickoxidausgangskonzentration NOx,1 und die Raumgeschwindigkeit SV2. Zusammen mit der Abgastemperatur T2 und weiteren Daten W werden diese Daten als Eingangsgrößen der zweiten Füllstandsermittlungseinheit 10' bzw. der Dosiereinheit 9 zur Verfügung gestellt. Wie in Fig. 9 dargestellt, kann die zweite Füllstandsermittlungseinheit 10' die für den zweiten Katalysatorteil 4 maßgebende Abgastemperatur T2 als berechneten Wert von der ersten Füllstandsermittlungseinheit 10 oder vom zweiten Temperatursensor 7 als Messwert erhalten. Mit den vom zweiten Temperatursensor gelieferten Messwerten kann außerdem ein Modellabgleich vorgenommen werden.

In analoger Weise errechnet die zweite Füllstandsermittlungseinheit 10' aus den ihr zur Verfügung gestellten Eingangsdaten für den zweiten Katalysatorteil 4 wie oben beschrieben den Füllstand $F_4$, den Alterungsfaktor AF2, den Ammoniakschlupf $S_{NH3, 2}$ und die Stickoxidausgangskonzentration NOx,2 und die Raumgeschwindigkeit SV2.

Die Dosiereinheit 9 ermittelt aus den ihr zur Verfügung gestellten Eingangsdaten eine zur Einstellung der angestrebten Ammoniakfüllstände des ersten und/oder des zweiten Katalysatorteils geeignete Harnstoffdosierrate D und steuert das Dosierventil 14 entsprechend an. Ferner kann die Dosiereinheit 9 durch Auswertung insbesondere der Alterungsfaktoren AF1, AF2 sowie der eingelesenen Stickoxidkonzentrationen NOx, 2 NOx, S1 und NOx, S2 eine Fehlfunktion für eines der Katalysatorteile 3, 4, der Temperatursensoren 6, 7, der Abgassensoren 90, 91 oder der Harnstoffdosierung bzw. des Dosierventils 14 feststellen und eine entsprechende Fehlermeldung ausgeben. Auf diese Weise kann von der Dosiereinrichtung bzw. der zentralen Steuereinheit 8 eine OBD-Funktion (Onboard-Diagnose) geleistet werden.

**Patentansprüche**

1.  Vorrichtung zur Entfernung von Stickoxiden aus dem Abgas einer überwiegend mit Luftüberschuss betriebenen Brennkraftmaschine (1), mit

    - einer Abgasleitung (2),
    - Mitteln (6, 7, 8, 11) zur Erfassung von Betriebsdaten der Brennkraftmaschine,
    - einer der Abgasleitung (2) zugeordneten Zugabestelle zur Zugabe eines ein Reduktionsmittel enthaltenden Zuschlagstoffs in das Abgas,
    - einem stromab der Zugabestelle in der Abgasleitung (2) angeordneten Stickoxid-Reduktionskatalysator (5) zur Reduktion von im Abgas enthaltenen Stickoxiden mit dem Reduktionsmittel, mit einem ersten Katalysatorteil (3) und einem stromab und räumlich getrennt vom ersten Katalysatorteil (3) angeordneten zweiten Katalysatorteil (4), wobei der Stickoxid-Reduktionskatalysator (5) zur Einspeicherung des Reduktionsmittels ausgebildet ist,
    - einer Dosiereinheit (9) zur Einstellung einer Zugabe für den über die Zugabestelle dem Abgas zugegebenen Zuschlagstoff, und
    - Füllstandsermittlungsmittel (10, 10') zur Ermittlung eines Reduktionsmittelfüllstands ($F_3$; $F_4$) von im ersten Katalysatorteil (3) und/oder im zweiten Katalysatorteil (4) gespeichertem Reduktionsmittel, wobei die Zugabe des Zuschlagstoffs in Abhängigkeit vom von den Füllstandsermittlungsmitteln (10, 10') ermittelten Reduktionsmittelfüllstand des ersten Katalysatorteils (3) und/oder des zweiten Katalysatorteils (4) einstellbar ist,

    **dadurch gekennzeichnet, dass**
    der erste Katalysatorteil (3) ein größeres Volumen aufweist als der zweite Katalysatorteil (4) und lediglich eine einzige Zugabestelle für den Zuschlagstoff vorgesehen ist.

2.  Vorrichtung nach einem der Anspruch 1,
    **dadurch gekennzeichnet, dass**
    der Reduktionsmittelfüllstand ($F_3$; $F_4$) eines jeweiligen Katalysatorteils (3, 4) durch Summation und zeitliche Integration von wenigstens

    - einer Umsatzrate ($U_{NOx}$) von im jeweiligen Katalysatorteil (3, 4) umgesetzten Reduktionsmittel,

    - einer Desorptionsrate von vom jeweiligen Katalysatorteil (3, 4) desorbierten Reduktionsmittel und
    - einer Zufuhrrate von dem jeweiligen Katalysatorteil (3, 4) mit dem Abgas zugeführten Reduktionsmittel

    ermittelbar ist.

3.  Vorrichtung nach Anspruch 2,
    **dadurch gekennzeichnet, dass**
    ein Kennfeldsatz für die Umsatzrate und die Desorptionsrate vorgesehen sind, auf welche die Füllstandsermittlungsmittel (10, 10') bei der Ermittlung des Reduktionsmittelfüllstands zugreifen können.

4.  Vorrichtung nach einem der Ansprüche 1 bis 3
    **dadurch gekennzeichnet, dass**
    für den Reduktionsmittelfüllstand ($F_3$) des ersten Katalysatorteils (3) ein erster Bereich (70) mit einem ersten unteren Schwellenwert ($F_{31}$) und einem ersten oberen Schwellenwert ($F_{32}$) und für den Reduktionsmittelfüllstand ($F_4$) des zweiten Katalysatorteils (4) ein zweiter Bereich (71) mit einem zweiten unteren Schwellenwert ($F_{41}$) und einem zweiten oberen ($F_{42}$) Schwellenwert vorgebbar sind und dass die Dosiereinheit (9) derart mit den Füllstandsermittlungsmitteln (10, 10') zusammenwirkt, dass eine Einregelung des Reduktionsmittelfüllstands ($F_3$; $F_4$) des ersten Katalysatorteils (3) und/oder des zweiten Katalysatorteils (4) in den jeweiligen Bereich (70; 71) ermöglicht ist.

5.  Vorrichtung nach Anspruch 4,
    **dadurch gekennzeichnet, dass**
    für den Stickoxid-Reduktionskatalysator (5) ein Alterungsfaktor (AF) ermittelbar ist und der erste und/oder der zweite Bereich (70; 71) für den Reduktionsmittelfüllstand ($F_3$; $F_4$) in Abhängigkeit vom Alterungsfaktor (AF) vorgebbar sind.

6.  Vorrichtung nach einem Anspruch 5,
    **dadurch gekennzeichnet, dass**
    ein für einen ungealterten Stickoxid-Reduktionskatalysator (5) angepasster erster Kennfeldsatz und ein für einen definiert gealterten Stickoxid-Reduktionskatalysator (5) angepasster zweiter Kennfeldsatz vorgesehen sind, wobei dem ersten Kennfeldsatz ein erster Alterungsfaktor und dem zweiten Kennfeldsatz ein zweiter Alterungsfaktor zugeordnet sind und die Füllstandsermittlungsmittel (10, 10') bei der Ermittlung des Reduktionsmittelfüllstands ($F_3$; $F_4$) in Abhängigkeit vom aktuellen Alterungsfaktor (AF) eine Interpolation zwischen den Daten des ersten Kennfeldsatzes und des zweiten Kennfeldsatzes vornehmen können.

7.  Vorrichtung nach einem der Ansprüche 1 bis 6,

**dadurch gekennzeichnet, dass**
ein gegenüber Stickoxid und/oder dem Reduktionsmittel empfindlicher Abgassensor (90; 91) stromab des ersten Katalysatorteils (3) und/oder des zweiten Katalysatorteils (4) in der Abgasleitung (2) angeordnet ist.

**8.** Verfahren zur Dosierung eines ein Reduktionsmittel enthaltenden Zuschlagstoffs in eine Abgasleitung (2) einer überwiegend mit Luftüberschuss betriebenen Brennkraftmaschine (1) mit

- einer Zugabestelle zur Zugabe des Zuschlagstoffs in das Abgas,
- einem stromab der Zugabestelle in der Abgasleitung (2) angeordneten Stickoxid-Reduktionskatalysator (5) mit einem ersten Katalysatorteil (3) und einem stromab und räumlich getrennt vom ersten Katalysatorteil (3) angeordneten zweiten Katalysatorteil (4) und
- einer Dosiereinheit (9) zur Regelung einer Zugabe für den über die Zugabestelle dem Abgas zugegebenen Zuschlagstoff,

wobei Daten betreffend Zustandsgrößen des Stickoxid-Reduktionskatalysator (5) und des Abgases sowie Betriebsdaten der Brennkraftmaschine ermittelt und anhand der ermittelten Daten ein Reduktionsmittelfüllstand ($F_3$; $F_4$) des ersten Katalysatorteils (3) und des zweiten Katalysatorteils (4) ermittelt wird und in Abhängigkeit vom Reduktionsmittelfüllstand ($F_3$; $F_4$) des ersten Katalysatorteils (3) und/oder des zweiten Katalysatorteils (4) der Reduktionsmittelfüllstand ($F_3$) des ersten Katalysatorteils (3) oder der Reduktionsmittelfüllstand ($F_4$) des zweiten Katalysatorteils (4) als Regelgröße für die Regelung der Zugabe des Zuschlagstoffs ausgewählt wird, **dadurch gekennzeichnet, dass**
der Reduktionsmittelfüllstand ($F_3$; $F_4$) eines jeweiligen Katalysatorteils (3, 4) durch Summation und zeitliche Integration von wenigstens

- einer Umsatzrate ($U_{NOx}$) von im jeweiligen Katalysatorteil (3, 4) umgesetzten Reduktionsmittel,
- einer Desorptionsrate von vom jeweiligen Katalysatorteil (3, 4) desorbierten Reduktionsmittel und
- einer Zufuhrrate von dem jeweiligen Katalysatorteil (3, 4) mit dem Abgas zugeführten Reduktionsmittel

ermittelt wird, wobei bei der Ermittlung der Umsatzrate ($U_{NOx}$) die Umsetzung von im jeweiligen Katalysatorteil (3, 4) gespeicherten Reduktionsmittel mit im Abgas enthaltenem Stickoxid und Sauerstoff berücksichtigt wird und die Zugabe des Zuschlagstoffes stets nur über die stromauf des ersten Katalysatorteils (3) angeordnete Zugabestelle erfolgt.

**9.** Verfahren nach Anspruch 8,
**dadurch gekennzeichnet, dass**
bei der Ermittlung der Zufuhrrate für den zweiten Katalysatorteil (4) die Desorptionsrate des ersten Katalysatorteils (3) berücksichtigt wird.

**10.** Verfahren nach Anspruch 8 oder 9,
**dadurch gekennzeichnet, dass**
für den Reduktionsmittelfüllstand ($F_3$) des ersten Katalysatorteils (3) ein erster Bereich (70) mit einem ersten unteren Schwellenwert ($F_{31}$) und einem ersten oberen Schwellenwert ($F_{32}$) vorgegeben werden und als Regelgröße für die Regelung der Zugabe des Zuschlagstoffs der Reduktionsmittelfüllstand ($F_3$) des ersten Katalysatorteils (3) ausgewählt wird, wenn der Reduktionsmittelfüllstand ($F_3$) des ersten Katalysatorteils (3) unter dem ersten oberen Schwellenwert ($F_{32}$) liegt.

**11.** Verfahren nach einem Anspruch 10,
**dadurch gekennzeichnet, dass**
für den Reduktionsmittelfüllstand ($F_3$) des ersten Katalysatorteils (3) ein über dem ersten oberen Schwellenwert ($F_{32}$) liegender oberer Grenzwert ($F_{33}$) vorgegeben wird und als Regelgröße für die Regelung der Zugabe des Zuschlagstoffs der Reduktionsmittelfüllstand ($F_4$) des zweiten Katalysatorteils (4) ausgewählt wird, wenn der Reduktionsmittelfüllstand ($F_3$) des ersten Katalysatorteils (3) zwischen dem ersten oberen Schwellenwert ($F_{32}$) und dem oberen Grenzwert ($F_{33}$) liegt.

**12.** Verfahren nach einem der Ansprüche 8 bis 11,
**dadurch gekennzeichnet, dass**
für den Stickoxid-Reduktionskatalysator (5) ein eine Temperaturbelastung des Stickoxid-Reduktionskatalysators (5) charakterisierender Alterungsfaktor (AF) ermittelt wird.

**13.** Verfahren nach Anspruch 12,
**dadurch gekennzeichnet, dass**
der erste Bereich (70) und/oder der obere Grenzwert ($F_{33}$) für den Reduktionsmittelfüllstand ($F_3$) des ersten Katalysatorteils (3) und/oder ein zweiter Bereich (71) für den Reduktionsmittelfüllstand ($F_4$) des zweiten Katalysatorteils (4) in Abhängigkeit vom Alterungsfaktor (AF) vorgegeben werden.

**Claims**

**1.** Device for removing nitrogen oxides from the exhaust gas of an internal combustion engine (1) which is largely operated with a lean mixture, comprising:

- an exhaust gas line (2),

- means (6, 7, 8, 11) for collecting operating data of the internal combustion engine,
- an addition point assigned to the exhaust gas line (2) for adding an additive containing a reducing agent to the exhaust gas,
- a nitrogen oxide reduction catalyst (5) installed downstream of the addition point into the exhaust gas line (2) for reducing nitrogen oxides contained in the exhaust gas with the reducing agent and comprising a first catalyst part (3) and a second catalyst part (4) provided downstream of and at a spatial distance from the first catalyst part (3), the nitrogen oxide reduction catalyst (5) being designed for the storage of the reducing agent,
- a metering unit (9) for adjusting an addition of the additive which is added via the addition point, and
- level detection means (10, 10') for detecting a reducing agent level ($F_3$; $F_4$) of reducing agent stored in the first catalyst part (3) and/or in the second catalyst part (4), the addition of the additive being adjustable as a function of the reducing agent level of the first catalyst part (3) and/or of the second catalyst part (4) as detected by the level detection means (10, 10'),

**characterised in that**
the first catalyst part (3) has a larger volume than the second catalyst part (4), and **in that** only one addition point is provided for the additive.

2. Device according to claim 1,
**characterised in that**
the reducing agent level ($F_3$; $F_4$) of each catalyst part (3, 4) can be determined by summation and chronological integration of at least:

- one conversion rate ($U_{NOx}$) of reducing agent converted in each catalyst part (3, 4),
- one desorption rate of reducing agent desorbed in each catalyst part (3, 4),
- one feed rate of reducing agent fed to each catalyst part (3, 4) with the exhaust gas.

3. Device according to claim 2,
**characterised in that**
sets of characteristics are provided for the conversion rate and for the adsorption rate, to which the level detection means (10, 10') have access when detecting the reducing agent level.

4. Device according to any of claims 1 to 3,
**characterised in that**
a first range (70) with a first lower threshold value ($F_{31}$) and a first upper threshold value ($F_{32}$) can be preset for the reducing agent level ($F_3$) of the first catalyst part (3) and a second range (71) with a second lower threshold value ($F_{41}$) and a second upper threshold value ($F_{42}$) can be preset for the reducing agent level ($F_4$) of the first catalyst part (4), and **in that** the metering unit (9) acts together with the level detection means (10, 10') in such a way that the reducing agent level ($F_3$; $F_4$) of the first catalyst part (3) and/or of the second catalyst part (4) can be adjusted to the respective range (70; 71).

5. Device according to claim 4,
**characterised in that**
an ageing factor (AF) can be determined for the nitrogen oxide reduction catalyst (5), and **in that** the first and/or the second range (70; 71) for the reducing agent level ($F_3$; $F_4$) can be preset as a function of the ageing factor (AF).

6. Device according to claim 5,
**characterised in that**
a first set of characteristics adapted for a non-aged nitrogen oxide reduction catalyst (5) and a second set of characteristics adapted for a definedly aged nitrogen oxide reduction catalyst (5) are provided, wherein a first ageing factor is assigned to the first set of characteristics and a second ageing factor is assigned to the second set of characteristics, and wherein the level detection means (10, 10') can perform an interpolation between the data of the first and second sets of characteristics as a function of the current ageing factor (AF) when determining the reducing agent level ($F_3$; $F_4$).

7. Device according to any of claims 1 to 6,
**characterised in that**
an exhaust gas sensor (90; 91) sensitive to nitrogen oxide and/or to the reducing agent is installed into the exhaust gas line (2) downstream of the first catalyst part (3) and/or of the second catalyst part (4).

8. Method for metering an additive containing a reducing agent into an exhaust gas line (2) of an internal combustion engine (1) which is largely operated with a lean mixture, comprising:

- an addition point for adding the additive to the exhaust gas,
- a nitrogen oxide reduction catalyst (5) installed downstream of the addition point into the exhaust gas line (2), comprising a first catalyst part (3) and a second catalyst part (4) provided downstream of and at a spatial distance from the first catalyst part (3), and
- a metering unit (9) for adjusting an addition of the additive which is added to the exhaust gas via the addition point,

wherein data relating to state variables of the nitrogen oxide reduction catalyst (5) and of the exhaust gas as well as operating data for the internal combustion engine are collected and a reducing agent level ($F_3$; $F_4$) of the first catalyst part (3) and the second catalyst part (4) is determined from the collected data and, as a function of the reducing agent level ($F_3$; $F_4$) of the first catalyst part (3) and/or the second catalyst part (4), the reducing agent level ($F_3$) of the first catalyst part (3) or the reducing agent level ($F_4$) of the second catalyst part (4) is selected as a control variable for the control of the addition of additive,
**characterised in that**
the reducing agent level ($F_3$; $F_4$) of each catalyst part (3, 4) is determined by summation and chronological integration of at least:

- one conversion rate ($U_{NOx}$) of reducing agent converted in each catalyst part (3, 4),
- one desorption rate of reducing agent desorbed in each catalyst part (3, 4), and
- one feed rate of reducing agent fed to each catalyst part (3, 4) with the exhaust gas

wherein the conversion of reducing agent stored in each catalyst part (3, 4) with the nitrogen oxide and oxygen contained in the exhaust gas is taken into account when determining the conversion rate ($U_{NOx}$), and wherein the additive is only added via the addition point upstream of the first catalyst part (3).

9. Method according to claim 8,
**characterised in that**
the desorption rate of the first catalyst part (3) is taken into account when determining the feed rate for the second catalyst part (4).

10. Method according to claim 8 or 9,
**characterised in that**
a first range (70) with a first lower threshold value ($F_{31}$) and a first upper threshold value ($F_{32}$) is preset for the reducing agent level ($F_3$) of the first catalyst part (3) and the reducing agent level ($F_3$) of the first catalyst part (3) is selected as a control variable for the addition of the additive if the reducing agent level ($F_3$) of the first catalyst part (3) is below the first upper threshold value ($F_{32}$).

11. Method according to claim 10,
**characterised in that**
an upper limit value ($F_{33}$) above the first upper threshold value ($F_{32}$) is preset for the reducing agent level ($F_3$) of the first catalyst part (3) and the reducing agent level ($F_4$) of the second catalyst part (4) is selected as a control variable for the addition of the additive if the reducing agent level ($F_3$) of the first catalyst part (3) lies between the first upper threshold value ($F_{32}$) and the upper limit value ($F_{33}$).

12. Method according to any of claims 8 to 11
**characterised in that**
an ageing factor (AF) characterising a thermal stress acting on the nitrogen oxide reduction catalyst (5) is determined for the nitrogen oxide reduction catalyst (5).

13. Method according to claim 12,
**characterised in that**
the first range (70) and/or the upper limit value ($F_{33}$) for the reducing agent level ($F_3$) of the first catalyst part (3) and/or a second range (71) for the reducing agent level ($F_4$) of the second catalyst part (4) is/are preset as a function of the ageing factor (AF).

**Revendications**

1. Dispositif permettant d'éliminer les oxydes d'azote des gaz d'échappement d'un moteur à combustion interne (1) fonctionnant principalement à l'air doté

- d'un collecteur (2) de gaz d'échappement,
- de moyens (6, 7, 8, 11) pour enregistrer les données de fonctionnement du moteur à combustion interne,
- d'un point d'addition associé au collecteur (2) de gaz d'échappement pour ajouter aux gaz d'échappement un additif contenant un agent de réduction,
- d'un catalyseur de réduction d'oxyde d'azote (5) monté en aval du point d'addition dans le collecteur (2) de gaz d'échappement destiné à réduire les oxydes d'azote contenus dans les gaz d'échappement à l'aide de l'agent de réduction, doté d'un premier élément catalytique (3) et d'un second élément catalytique (4) monté en aval et séparé dans l'espace du premier élément catalytique (3), le catalyseur de réduction d'oxyde d'azote (5) étant conçu pour stocker l'agent de réduction,
- d'une unité de dosage (9) pour doser l'additif ajouté aux gaz d'échappement au point d'addition et,
- de moyens de détermination du niveau de remplissage (10, 10') pour déterminer un niveau de remplissage ($F_3$, $F_4$) en agent de réduction stocké dans le premier élément catalytique (3) et / ou dans le second élément catalytique (4), l'apport en additif pouvant être dosé en fonction du niveau de remplissage en agent de réduction déterminé par les moyens de détermination de niveau de remplissage (10, 10') du premier élément catalytique (3) et / ou du second élément catalytique (4), **caractérisé en ce que** le premier élément catalytique (3) présente un volume supérieur à celui du second élément catalytique (4) et un seul point d'addition étant prévu.

**2.** Dispositif selon la revendication 1, **caractérisé en ce que** le niveau de remplissage en agent de réduction ($F_3$, $F_4$) d'un élément catalytique (3, 4) est déterminé par l'addition et l'intégration temporelle d'au moins

- un taux de conversion ($U_{NOx}$) de l'agent de réduction converti dans chaque élément catalytique (3, 4),
- un taux de désorption de l'agent de réduction désorbé par chaque élément catalytique (3, 4) et un débit d'alimentation de chaque élément catalytique (3, 4) avec l'agent de réduction amené dans les gaz d'échappement.

**3.** Dispositif selon la revendication 2, **caractérisé en ce qu'**un bloc de diagramme caractéristique pour le taux de conversion et le taux de désorption est prévu auquel les moyens de détermination du niveau de remplissage (10, 10') peuvent accéder lors de la détermination du niveau de remplissage de l'agent de réduction.

**4.** Dispositif selon l'une quelconque des revendications 1 à 3, **caractérisé en ce qu'**il est prédéfini pour le niveau de remplissage en agent de réduction ($F_3$) du premier élément catalytique (3) une première zone (70) avec une première valeur seuil inférieure ($F_{31}$) et une première valeur seuil supérieure ($F_{32}$) et pour le niveau de remplissage en agent de réduction ($F_4$) du second élément catalytique (4) une seconde zone (71) avec une seconde valeur seuil inférieure (F41) et une seconde valeur seuil supérieure ($F_{42}$) et **en ce que** l'unité de dosage (9) agit ensemble avec les moyens de détermination du niveau de remplissage (10, 10') de telle sorte qu'un réglage du niveau de remplissage en agent de réduction ($F_3$, $F_4$) du premier élément catalytique (3) et / ou du second élément catalytique (4) soit possible dans chaque zone (70, 71).

**5.** Dispositif selon la revendication 4, **caractérisé en ce que** pour le catalyseur de réduction d'oxyde d'azote (5) un facteur de vieillissement (AF) peut être déterminé et la première et / ou la seconde zones (70, 71) peuvent être prédéfinies pour le niveau de remplissage en agent de réduction ($F_3$, $F_4$) en fonction du facteur de vieillissement (AF).

**6.** Dispositif selon la revendication 5, **caractérisé en ce qu'**il est prévu un premier bloc de diagramme caractéristique adapté à un catalyseur (5) de réduction d'oxyde d'azote peu usagé et un second bloc de diagramme caractéristique adapté à un catalyseur (5) de réduction d'oxyde d'azote usagé, le premier bloc de diagramme caractéristique étant affecté au premier facteur de vieillissement et le second bloc de diagramme caractéristique à un second facteur de vieillissement et les moyens de détermination du niveau de remplissage (10, 10') pouvant effectuer une interpolation entre les données du premier bloc de diagramme caractéristique et du second bloc de diagramme caractéristique lors de la détermination du niveau de remplissage en agent de réduction ($F_3$, $F_4$) en fonction du facteur de vieillissement (FA) actuel.

**7.** Dispositif selon l'une quelconque des revendications 1 à 6, **caractérisé en ce qu'**un capteur de gaz d'échappement (90, 91) sensible à l'oxyde d'azote et / ou à l'agent de réduction est monté en aval du premier élément catalytique (3) et / ou du second élément catalytique (4) dans le collecteur (2) de gaz d'échappement.

**8.** Procédé pour doser un additif contenant un agent de réduction dans un collecteur (2) de gaz d'échappement d'un moteur à combustion interne (1) fonctionnant principalement à l'air doté

- d'un point d'addition pour l'ajout de l'additif dans le gaz d'échappement,
- d'un catalyseur de réduction d'oxyde d'azote (5) monté en aval du point d'addition dans le collecteur (2) de gaz d'échappement doté d'un premier élément catalytique (3) et d'un second élément catalytique (4) disposé en aval et séparé dans l'espace du premier élément catalytique (3), et
- d'une unité de dosage (9) pour doser l'additif ajouté aux gaz d'échappement au niveau du point d'addition,

les données relatives aux paramètres d'état du catalyseur de réduction d'oxyde d'azote (5) et du gaz d'échappement ainsi que les données de fonctionnement du moteur à combustion interne étant déterminées, et au moyen des données déterminées il est déterminé un niveau de remplissage en agent de réduction ($F_3$, $F_4$) du premier élément catalytique (3) et du second élément catalytique (4) et en fonction du niveau de remplissage de l'agent de réduction ($F_3$, $F_4$) du premier élément catalytique (3) et / ou du second élément catalytique (4) le niveau de remplissage de l'agent de réduction ($F_3$) du premier élément catalytique (3) ou le niveau de remplissage de l'agent de réduction ($F_4$) du second élément catalytique (4) est sélectionné comme variable de régulation pour l'apport en additif, **caractérisé en ce que** le niveau de remplissage d'agent de réduction ($F_3$, $F_4$) de chaque élément catalytique (3, 4) est déterminé par l'addition et l'intégration temporelle d'au moins

- un taux de conversion ($U_{NOx}$) de l'agent de réduction converti dans chaque élément catalytique (3, 4),

- un taux de désorption de l'agent de réduction désorbé par chaque élément catalytique (3, 4) et un débit d'alimentation de chaque élément catalytique (3, 4) en agent de réduction amené dans les gaz d'échappement, lors de la détermination du taux de conversion ($U_{NOx}$) la conversion de l'agent de réduction stocké dans chaque élément catalytique (3, 4) est prise en compte avec l'oxyde d'azote et l'oxygène contenus dans le gaz d'échappement et l'ajout de l'additif s'effectue toujours uniquement par le point d'addition disposé en amont du premier élément catalytique (3).

**9.** Procédé selon la revendication 8, **caractérisé en ce que** lors de la détermination du débit d'alimentation du second élément catalytique (4), le taux de désorption du premier élément catalytique (3) est pris en compte.

**10.** Procédé selon la revendication 8 ou 9, **caractérisé en ce que** pour le niveau de remplissage de l'agent de réduction ($F_3$) du premier élément catalytique (3) une première zone (70) avec une première valeur seuil inférieure ($F_{31}$) et une première valeur seuil supérieure ($F_{32}$) est prévue et sélectionnée comme variable de régulation pour le dosage de l'ajout de l'additif du niveau de remplissage d'agent de réduction ($F_3$) du premier élément catalytique (3), lorsque le niveau de remplissage d'agent de réduction ($F_3$) du premier élément catalytique (3) se trouve en dessous de la valeur seuil supérieure ($F_{32}$).

**11.** Procédé selon la revendication 10, **caractérisé en ce que** pour le niveau de remplissage de l'agent de réduction ($F_3$) du premier élément catalytique (3) est prévue une valeur limite supérieure ($F_{33}$) se trouvant au-dessus de la première valeur seuil supérieure ($F_{32}$) et est sélectionnée comme variable de régulation pour le dosage de l'ajout de l'additif du niveau de remplissage d'agent de réduction ($F_4$) du second élément catalytique (4), lorsque le niveau de remplissage d'agent de réduction ($F_3$) du premier élément catalytique (3) est compris entre la première valeur seuil supérieure ($F_{32}$) et la valeur limite supérieure ($F_{33}$).

**12.** Procédé selon l'une quelconque des revendications 8 à 11, **caractérisé en ce que** pour le catalyseur de réduction d'oxyde d'azote (5) est déterminé un facteur de vieillissement (AF) qui caractérise une contrainte thermique du catalyseur de réduction d'oxyde d'azote (5).

**13.** Procédé selon la revendication 12, **caractérisé en ce que** la première zone (70) et / ou la valeur limite supérieure ($F_{33}$) pour le niveau de remplissage d'agent de réduction ($F_3$) du premier élément catalytique (3) et / ou une seconde zone (71) pour le niveau de remplissage d'agent de réduction ($F_4$) du second élément catalytique (4) sont prévues en fonction du facteur de vieillissement (AF).

Fig. 1

Fig. 2

**Fig. 3**

**Fig. 4**

**Fig. 5**

**Fig. 6**

**F₃** graph (Fig. 7a)

$$F_3$$

$F_{33}$

$F_{32}$
$F_{31}$

70

**Fig. 7a**

**F₄** graph (Fig. 7b)

$$F_4$$

$F_{42}$
$F_{41}$

71

**Fig. 7b**

Start — 800

$F_3 < F_{32}?$ — 801

J → Kat1
806

N

$F_3 < F_{33}?$ — 802

J → Kat2
805

N

$F_3 < F_{32}?$
803

J

N

804 — Aus

**Fig. 8a**

**Fig. 8b**

**Fig. 8c**

**Fig. 9**

EP 1 866 062 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10126456 A1
- EP 1132585 A2

- DE 4217552 C1